Europäisches Patentamt

European Patent Office

Office européen des brevets

(11) Publication number: **0 424 332 A2**

# EUROPEAN PATENT APPLICATION

(21) Application number: **90830442.1**

(22) Date of filing: **09.10.90**

(51) Int. Cl.5: **B27F 1/02**

(30) Priority: **19.10.89 IT 366689**

(43) Date of publication of application:
**24.04.91 Bulletin 91/17**

(84) Designated Contracting States:
**AT DE ES FR GB**

(71) Applicant: **SCM S.p.A.**
**Via Emilia, 71**
**I-47037 Rimini (Forlî)(IT)**

(72) Inventor: **Maioli, Fabio**
**Via C. A. Dalla Chiesa, 11**
**I-47038 Sant'Arcangelo di Romagna(Forli)(IT)**

(74) Representative: **Lanzoni, Luciano**
**c/o BUGNION S.p.A. Via dei Mille, 19**
**I-40121 Bologna(IT)**

(54) **A tenoning machine.**

(57) The tenoner comprises a pair of mutually opposed and parallel upright frames (10a, 10b), one capable of movement toward and away from the other, with work stations (4, 5) mounted to their respective bases. Each frame carries two belt loops (11, 12) disposed parallel and arranged respectively below and above the work stations, and two grippers (8), each mounted pivotably to a respective bracket (13) traversed by a corresponding belt loop (11, 12) and rotatable about a horizontal axis (x) between an operative and a non-operative position; the belts are programmed to traverse one pair of grippers (8) through the machining feed direction (F) from a load station (3) to an unload station (6), in the operative position, while returning the remaining pair of grippers through the opposite direction in the non-operative position.

FIG1

EP 0 424 332 A2

# A TENONING MACHINE

The invention relates to a tenoning machine.

In the art field of woodworking, use is made of power machines by which members are cut to size and tenoned prior to undergoing further operations and being assembled ultimately into frames as component parts of window and door fixtures, in particular; such a machine is indeed known as a tenoner.

Machines of the type in question generally comprise a pair of cross cut saws and a vertical axis tenon cutter, positioned in sequence along a set path. In the most recent tenoners, feed and cut are both automatic, the only manual operation being that of clamping the work to the feed carriage, which is designed to accommodate one workpiece at a time, gripping and carrying each through a predetermined trajectory (in two feed directions). The tenoned piece is then transferred to a moulding machine. Even with this newer semiautomatic technology, such machines continue to betray drawbacks, insofar as their layout tends to be characterized by length, and their structure complicated; two saws are used, and the work is machined in two different ways and from different directions (a factor causing early wear of the cutting tools).

In a fully automatic tenoner disclosed recently by the same applicant (see Italian patent 1187376), the feed carriage is equipped with clamps rotatable about their own vertical axes, by which a pair of workpieces can be held and secured at one time. The carriage and clamp assembly is operated by electronic means, numerically controlled, and made to perform a cycle which may be summarized thus: receipt and clamping of the two workpieces; a first pass in which the work is offered to a tenoner and a cutter, effected by a horizontal movement of the carriage; a second pass whereby the same pieces are offered to the same two tools, but turned 180| from the position of the first pass (by the action of the rotatable clamps), during which the work is also cut to its final length by repositioning the carriage (programmed previously by way of the NC). The tenoned pieces are ejected via a station from which transfer to the moulding machine is effected, whereupon the carriage retracts at high speed to the load station in readiness to repeat the cycle.

As suggested by the brief description above, this tenoner affords greater compactness and speed than former designs, and economy too, thanks to the adoption of the rotatable clamps and CNC operation. Nonetheless, the improved machine betrays certain defects from structural and production standpoints. Structural drawbacks are discernible in the complex nature of the carriage drive mechanisms generally, and especially those by which tenoned members are offered to a reference surface to determine their final length; due to the type of movement required, in fact, these mechanisms (cylindrical guides and lead screws) need to feature substantially massive dimensions and special coupling arrangements, with the result that the structure exhibits a certain rigidity. The other defect mentioned is reflected in a lack of productivity stemming from the fact that the tenoner is used in combination with other woodworking machines, such as the newer moulders, capable of turning out a number of pieces per hour greater than can be matched by the tenoner, even when operating at maximum tempo.

The need is thus discerned by the applicant for a tenoner with enhanced engineering and construction features, capable of responding to the requirements of a market sector demanding much higher rates of output in tenoned work than have been obtainable hitherto.

Accordingly, the object of the present invention is to overcome the drawbacks aforementioned, through the provision of a tenoner in which the advantages of economy, accuracy of machining and significantly improved output are all combined.

The stated object is realized in a tenoning machine as characterized in the appended claims. The work stations in a such a machine are mounted to the bases of a pair of mutually opposed upright frames of which one is capable of movement in relation to the other, and both are disposed transversely in relation to a conveyor; each such frame is equipped with two parallel belt loops, located one below and one above the work stations, capable of traversing back and forth between the load and unload stations of the machine and of transmitting their movement to corresponding grippers, each mounted pivotally to a relative support rigidly associated with the respective belt loop and rotatable thus about its own horizontal pivot axis between a non-operative position and an operative position. The belts are operated by programmable control means in such a way as to allow of traversing one pair of grippers through one direction in the operative position while returning the remaining pair of grippers through the opposite direction in the non-operative position.

A first advantage of the machine according to the invention is that it is relatively small in general terms, and structured in such a way that two pieces of wood can be machined in a single pass.

A further advantage of the machine is its increased productivity, gained by virtue of the fact that two pairs of grippers are used, and a greater number of machining passes is therefore made possible per unit of operating time.

The invention will now be described in detail, by way of example, with the aid of the accompanying drawings, in which:

-fig 1 is a general illustration of the tenoning machine disclosed, seen in perspective from above;

-fig 2 is a side elevation of the machine of fig 1;

-fig 3 is an enlargement of detail A in fig 1, seen in side elevation with certain parts omitted better to reveal others;

-fig 4 shows a gripper of the machine disclosed, seen in side elevation with certain parts omitted better to reveal others;

-fig 5 illustrates an alternative embodiment of the gripper, seen in side elevation with certain parts omitted better to reveal others;

-fig 6 is a schematic representation of the gripper of fig 4, viewed in plan from above with certain parts omitted better to reveal others.

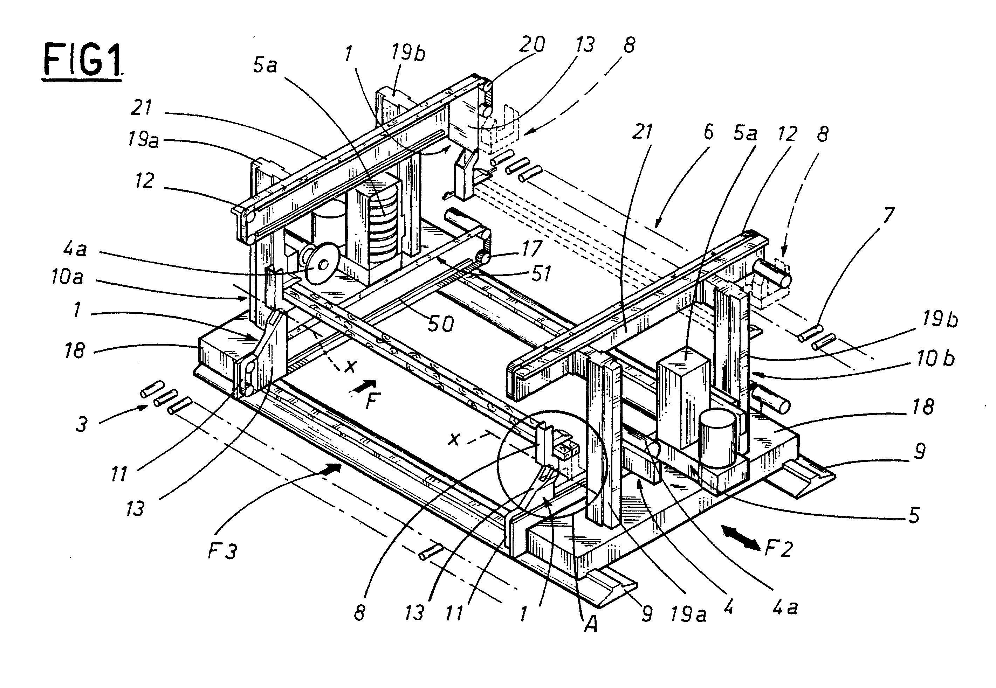

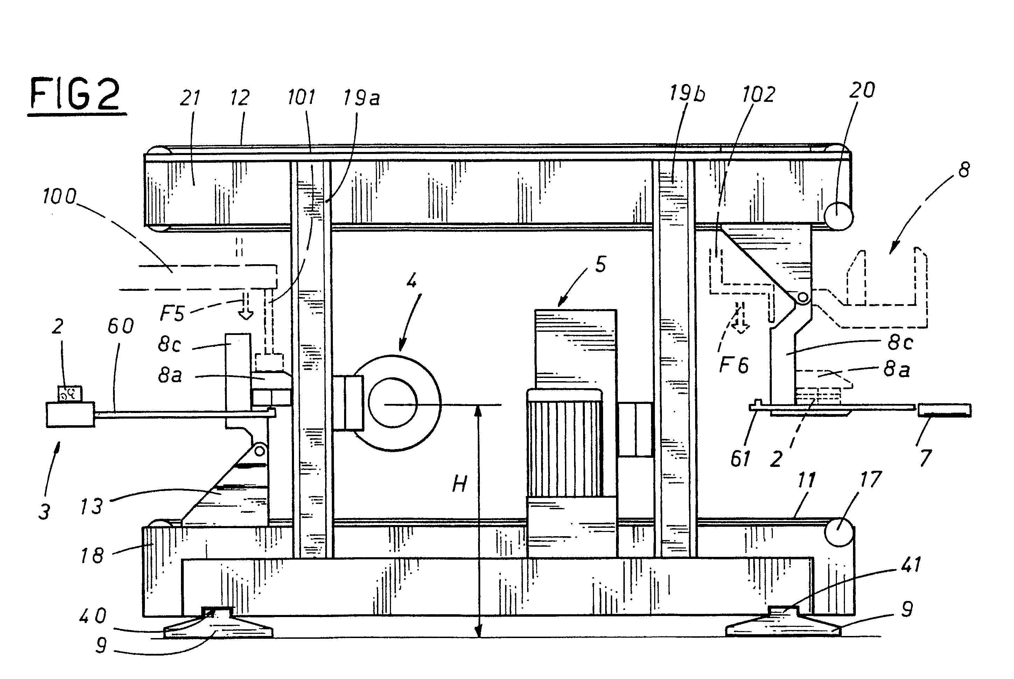

With reference to the drawings, a tenoning machine according to the present invention is of the type comprising feed means 1 by which workpieces 2 are carried through a number of work stations. Such means 1 are capable of horizontal movement from a load station 3 (conventional, and therefore shown only schematically) through work stations 4 and 5 respectively comprising cross cut saws 4a and tenon cutters 5a and set at a machining height denoted H, to an unload station 6 (likewise conventional, and shown schematically); the unload station consists essentially in a rectilinear conveyor 7 disposed at right angles to the direction F (fig 1) of the feed means 1, the purpose of which is to transfer the cut and tenoned work 2 to a moulding machine. The feed means 1 are provided further with gripping means 8 (to be described in due course) by which two workpieces 2 together can be received from the load station 3, secured in the horizontal plane, and transferred thereafter to the unload station 6. More exactly, and referring to figs 1 and 2, the feed means 1 consist substantially in a pair of parallel ways 9 laid at floor level between the load station 3 and the conveyor 7, parallel with the conveyor, and a pair of opposed frames 10a and 10b disposed transversely to and supported by the ways 9; one of the two frames is slidable along the ways in the direction denoted F2, and thus can be positioned in relation to the other frame according to the finished length of the work 2 ultimately required.

The frames 10a and 10b stand on relative bases 18, of which at least that supporting the moving frame (denoted 10b in the example illustrated) affords a pair of sockets 40 matched to the rails 41 of the ways 9 and serving to enable sliding movement of the frame 10b toward and away from the frame 10a facing. The top face of each base 18, i.e. opposite from that in contact with the ways 9, supports two vertical and parallel columns 19a and 19b, between which the aforementioned work stations 4 and 5 are positioned, likewise supported by the base. Each base carries a first set of keyed rollers 17 (one of which power driven) disposed transversely to the feed direction F in quadrilateral formation, about which a horizontally disposed bottom belt 11 is looped; 20 denotes a second set of rollers similar to the first, which are mounted to a horizontally disposed plate 21 attached to the top ends of the columns 19a and 19b, and carry a top belt loop 12 disposed parallel to the bottom loop.

The resulting four single belt loops 11 and 12 are arranged in two matched pairs, and serve to direct the aforementioned gripping means 8 horizontally and in alternation back and forth between the load and unload stations 3 and 6. The gripping means 8 consist substantially in a single set of grippers (referred to in the text simply as 'gripper' for convenience) to each of the belt loops 11 and 12 installed, mounted pivotably to relative supports or brackets 13 carried by and slidable along pairs of tracks 50 and 51 afforded by the frames 10a and 10b, and rotatable thus about a horizontal axis x disposed at right angles to the feed direction F, between a non-operative position (phantom line in figs 1 and 2) in which the gripper 8 is set at a height other than the aforesaid machining height H so that contact with the remaining gripper carried by the same frame is prevented, and an operative position in which the gripper 8 is set at a height coinciding with the machining height H.

More exactly, the single gripper 8 consists in a pair of jaws 8a and 8b, the first height adjustable and the second fixed, and a post 8c hinged to the bracket 13. Each gripper 8 is also provided with means 14 by which to produce the aforementioned movement between the operative and non-operative positions, and with adjustment and locking means 22 that impinge on the adjustable jaw 8a in such a way as to permit of varying its height between a closed position and an open position in which workpieces 2 are clamped and released, respectively.

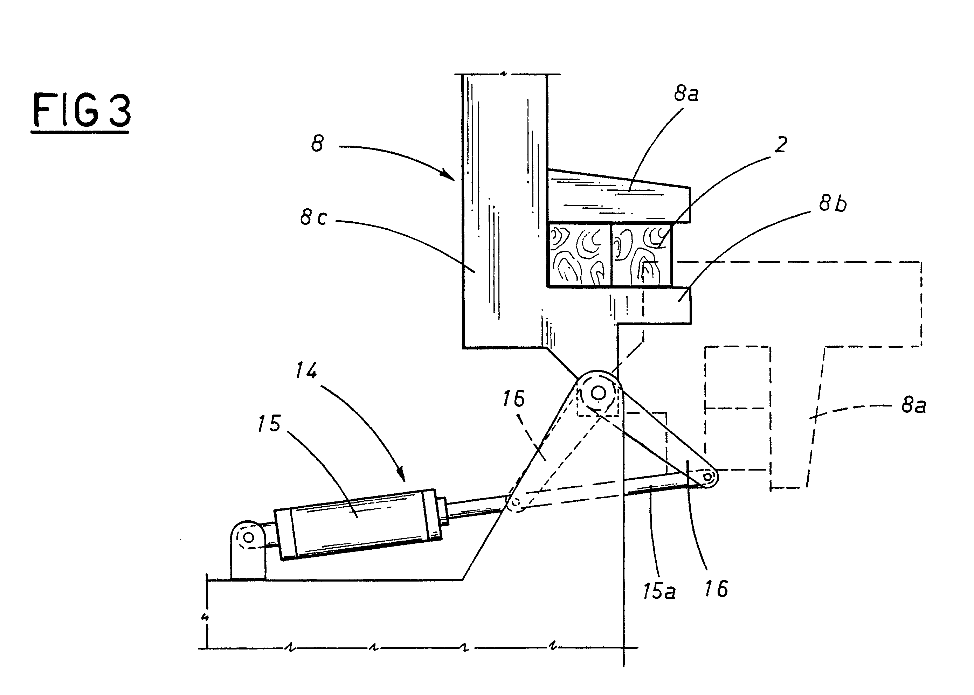

Fig 3 illustrates the positioning means 14 serving one gripper (clearly enough, each gripper 8 will be individually equipped), which consist in a fluid power cylinder 15 anchored to and accommodated by the relative support bracket 13; the rod 15a of the cylinder 15 is hinged by way of its projecting end to one end of a lever 16, of which the remaining end is rigidly associated with the gripper post 8c at a point coinciding with the pivot axis through which the post and the bracket 13 are associated (the position of the lever 16 corresponding to the non-operative position of the gripper is shown in phantom line). Whilst the relative positioning of the cylinder 15 and the bracket 13 will naturally be different according to whether the gripper 8 is associated with a top or a bottom belt loop, the angle of rotation that separates the operative and non-operative positions is always 90|.

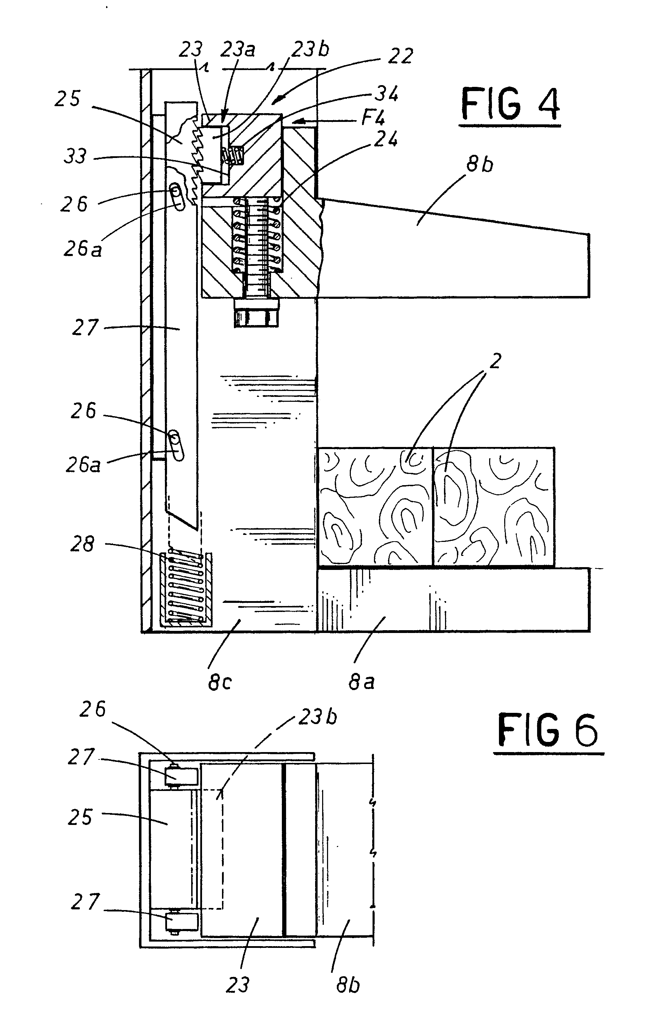

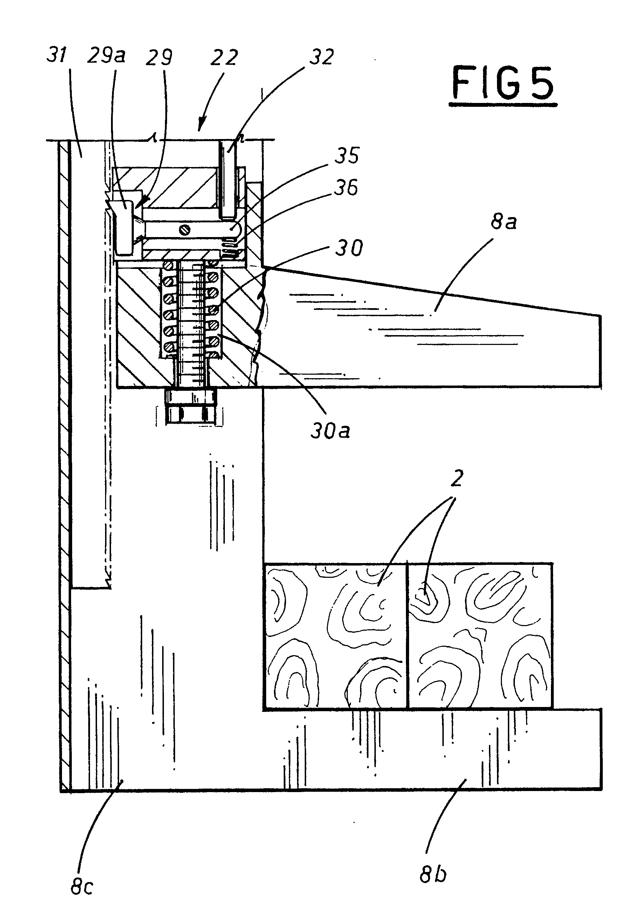

In a first type of embodiment illustrated in fig 4, the adjustment and locking means 22 consist in a block 23 capable of vertical movement internally of the gripper post 8c and supported by a spring 24 accommodated internally of the jaw 8a, immediately beneath the block; this same spring 24 serves to tension the jaw 8a in the clamped and released positions aforementioned.

23a denotes a catch mechanism accommodated inside the block 23 and directed toward a rack 25 disposed parallel with and internally of the gripper post 8c and sandwiched between a pair of vertical plates 27 each affording a pair of angled slots 26a that are slidably occupied by corresponding pins 26 rigidly associated with and extending at right angles from the rack 25 (see figs 4 and 6).

Also shown in fig 4 is a return spring 28 located substantially at the bottom end of the post 8c and engaging the assembly of parts that comprises the block 23 and the tension spring 24 in such a way as to urge these same parts forcibly upwards.

More exactly, the catch mechanism 23a illustrated in fig 4 consists in a plate 23b offered frontally to the rack 25 and accommodated internally of a recess 33 afforded by the block 23; the plate 23b exhibits a profile complementary to and positively engageable with that of the rack 25, and is capable of horizontal movement in the direction denoted F4, brought about by a spring 34 located between the plate 23b itself and the wall of the recess 33, between a position projecting from the recess 33, in which the spring 34 is relaxed and the block 23 distanced from the rack 25, and a position close to the wall of the recess 33 in which the spring 34 is fully compressed and the block 23 urged against the rack 25.

The work 2 is clamped utilizing conventional fluid power devices, illustrated schematically in fig 2 by the phantom lines denoted 100 (mounting) and 101 (the device proper), to produce a downward thrust on each block 23 and thus urge the top jaw 8a into contact with the work 2, compressing the tension spring 24 (arrow F5, fig 2); the catch 23a ensures that the jaw 8a is locked at the correct height, whilst the spring 24 ensures that the necessary clamp pressure is applied to the work 2 even after the force of the fluid power device 101 has been removed. Similarly, the work 2 is released by the action of further fluid power devices 102 at the unload station 6 (illustrated schematically with phantom lines in fig 2), which will impinge on the vertical plates 27 in the direction of the arrow denoted F6, thus causing them to shift toward the block 23 by reason of the angle of the slots 26a. Thus, the block 23 is distanced from the rack 25, disengaging the catch 23a and allowing the return spring 28 to force the jaw 8a upwards.

In an alternative embodiment of the adjustment and locking means 22, shown in fig 5, use is made of a horizontal catch mechanism 29 pivotably mounted to the moving jaw 8a, in conjunction with a vertical spring 30 accommodated in a relative seating 30a; the catch mechanism is again offered to a rack 31, in this instance fastened direct to the post 8c and extending its entire internal length. Unlike the embodiment first described, the clamp and release movement of the jaw 8a occurs through the pivot action of the catch mechanism 29, which is engaged from above by a vertical plunger 32 driven by the usual fluid power means, and made to rock between a distanced limit position of separation from the rack 31, and a limit position of engagement with the rack.

In this embodiment, the catch mechanism 29 consists effectively in a pawl 29a offered to the rack 31, carried by a horizontal lever 35 extending parallel with the axis of the jaw 8a and associated with the latter by way of a vertically disposed spring 36 seated between the part of the jaw 8a encompassed by the post 8c, on the one hand, and the lever 35 on the other. The purpose of the spring 36 is to enable the lever 35 to return to the position of engagement with the rack 31 whenever the vertical plunger 32, positioned directly over the end of the lever farthest from the rack as shown in fig 5, is raised by operation of the respective fluid power means.

Here too, the top jaw 8a will remain tensioned when the work 2 is released, by virtue of the fact that engagement of the catch mechanism with the rack 31 to clamp the work automatically preloads the return movement by compressing the spring 30 internally of its vertical seating 30a.

The system and the single components of a tenoner thus described will of course be operated and synchronized by means (numerical control) such as permit of machining work 2 swiftly and accurately.

Operation of the machine will now be described. First, the frames 10a and 10b will be set apart at a distance corresponding to the selected length of the finished work 2. Workpieces arriving from the load station 3 are arranged side by side in pairs and positioned across the feed direction (arrow F3) by a loading and selecting table 60 (schematically illustrated only in fig 2, being conventional in embodiment) in readiness for collection by one of the two pairs of grippers 8 (the bottom pair, in the example of figs 1 and 2). The grippers rotate into the operative position, whereupon the two pieces 2 are secured by the locking means 22 and traversed through the work stations 4 and 5. With the machining operations completed, the grippers 8 release the cut and tenoned work 2, which is taken up by an unloading table 61 (also conventional and schematized only in fig 2) and transferred through the unload station onto the conveyor 7, thence away to the moulding machine. At the same time as the bottom grippers 8 make this machining pass, the top grippers 8 will be returning empty in the opposite direction, having released two previously finished pieces 2 for transfer to the conveyor 7; the return of the empty grippers occurs in the non-operative position, thus avoiding collision with the grippers currently holding work, which will of course be in the operative position.

Needless to say, the cross cut saw 4a and the tenon cutter 5a are positioned such that the machining height H falls at mid-distance between the top and bottom pairs of grippers 8; the machined cuts thus remain identical throughout operation, and the top and bottom grippers can be of identical embodiment. Accordingly, the top pair and the bottom pair of grippers are positioned such as to occupy a common plane, coinciding with the machining height H, when traversed in the operative position. Clearly, the non-operative position will be dissimilar for the top and bottom grippers, i.e. on a level higher above datum than the machining height H (see fig 2) in the case of the top grippers, and lower in the case of the bottom grippers.

Finally, it will be observed from figs 1 and 2 that the pivoted gripper post 8c provides a stop against which to steady the work 2 during the two cutting strokes, and when traversed with the gripper in the operative position, is placed in opposition to the direction of rotation of the respective blade 4a and cutter 5a; this has the effect of limiting mechanical stresses transmitted through the work 2 to the adjustable top jaw 8a of the gripper during machining.

## Claims

1) A tenoning machine of the type comprising means (1) by which to feed workpieces (2) horizontally in a direction (F) transverse to the longitudinal axis of the machine from a load station (3) through work stations (4, 5) respectively comprising at least one crosscut saw (4a) and at least one tenon cutter (5a) disposed at a common machining height (H) to a station (6) from which the cut and tenoned work is unloaded onto a rectilinear conveyor (7) disposed transversely to the feed direction (F) for transfer to a successive moulding machine, wherein the feed means (1) comprise gripping means (8) by which at least two workpieces arranged horizontally and paired one with the other can be collected from the load station (3) and secured horizontally, then released and transferred to the unload station (6),
characterized
in that it comprises:
-feed means (1) comprising a pair of mutually opposed frames (10a, 10b) disposed parallel with one another and with the feed direction (F), one at least capable of movement away from and toward the other, of which the bases serve to carry the work stations (4, 5) equipped with cross cut saws (4a) and tenon cutters (5a);
-gripping means, consisting in two grippers (8) associated with each frame (10a, 10b), positioned one above and one below the level of the work stations (5), each pivotably mounted to a support bracket (13) capable of horizontal movement along a corresponding track (50, 51) afforded by the relative frame (10a, 10b) and rotatable about a horizontal axis (x) disposed perpendicular to the feed direction (F) between an operative position, in which the gripper lies at a height substantially coinciding with the machining height (H), and a non-operative position in which the gripper lies at a height other than the machining height (H) and beyond the compass of the remaining gripper carried by the same frame (10a, 10b);
-drive means (11, 12) associated with each frame (10a, 10b) and operated by programmable control means, by which the brackets (13) are traversed horizontally and in alternation between the load and unload stations (3, 6) in such a way as to advance one pair of grippers (8) through the feed direction (F) in the operative position, carrying two workpieces (2), while returning the remaining pair of grippers (8) through the opposite direction in the non-operative position.

2) A tenoning machine as in claim 1, wherein drive means (11, 12) consist in flexible means associated with the frames (10a, 10b) and occupying positions respectively above and below the level of the work stations (4, 5).

3) A tenoning machine as in claim 2, wherein flexible means (11, 12) consist in parallel belt loops mounted two to each frame (10a, 10b) occupying a vertical plane and positioned one loop below the work stations (4, 5) and one loop above the work stations, each of which traversing one respective support bracket (13).

4) A tenoning machine as in claim 1, wherein each of the gripping means (8) is provided with means (14) serving to bring about its movement between the operative and non-operative positions, consisting in a fluid power cylinder (15) anchored to and encompassed by the relative support bracket (13) with the projecting end of its rod (15a) pivotably attached to one end of a lever (16) of which the remaining end is rigidly attached to the gripper (8) and rotatable therewith, in relation to the bracket (13), about the horizontal axis (x).

5) A tenoning machine as in claim 1, wherein each of the gripping means (8) incorporates adjustment and locking means (22) operating on at least one jaw (8a) of the gripper in such a way that the height of the jaw can be altered by sliding internally of a post (8c) between positions in which workpieces (2) are clamped and released, respectively.

6) A tenoning machine as in claim 5 wherein adjustment and locking means (22) comprise:

-a catch mechanism (23a), accommodated within a block (23) supported by the adjustable jaw (8a) and capable of vertical movement internally of the gripper post (8c), loaded against a vertical spring (24) by which the jaw (8a) is tensioned in the clamp and release positions;

-a rack (25) extending parallel with and internally of the gripper post (8c), facing toward the catch mechanism (23a), and sandwiched between a pair of vertical plates (27) that are capable of movement produced by external fluid power means and enabled by pairs of angled slots (26) formed in the plates and occupied slidably by corresponding pins (26a) associated rigidly with and extending horizontally from the rack (25), between a position distanced from the block (23), in which the catch (23a) and the rack (25) engage, and a position close to the block in which the catch and the rack are distanced one from the other;

-a spring (28) positioned below the block (23) and impinging on the adjustable jaw (8a), by which the jaw is returned to a position in which workpieces (2) are released.

7) A tenoning machine as in claim 5 wherein adjustment and locking means (22) comprise:

-a horizontally disposed catch mechanism (29) pivotably mounted to the adjustable jaw (8a) and associated with a vertical spring (30) accommodated in a relative seating (30a), by which the jaw is tensioned in the clamp and release positions;

-a rack (31) fastened internally to and extending the entire length of the gripper post (8c), facing toward the catch mechanism (29);

-a vertical plunger (32) operated by external fluid power means, positioned above and impinging on the catch mechanism (29), by which the catch is moved between a limit position of separation from the rack (31), and a limit position of engagement with the rack.

8) A tenoning machine as in claim 6, wherein the catch mechanism (23a) consists in a plate (23b) directed toward and offering a profile complementary to that of the rack (25), accommodated internally of a recess (33) and capable of movement, through the agency of a spring (34) located between the plate (23b) and the wall of the recess (33), between a position close to the wall of the recess in which the spring (34) is fully compressed and the block (23) close to the rack, and a position projecting from the recess (33) in which the spring (34) is relaxed and the block distanced from the rack.

9) A tenoning machine as in claim 7, wherein the catch mechanism (29) consists in a pawl (29a) directed toward the rack (31) and carried by a horizontal lever (35) extending parallel with the adjustable jaw (8a), and a vertical spring (36) located between and interconnecting the jaw (8a) and the lever (35) and impinging on the lever (35) in such a way as to return the catch mechanism (29) to its limit position of engagement with the rack whenever the vertical plunger (32), positioned above the end of the lever (35) opposite from the pawl (29a), is distanced from the lever.

10) A tenoning machine as in claims 1 and 3, wherein the frames (10a, 10b) stand on a pair of parallel ways (9) positioned between the load station (3) and the rectilinear conveyor (7), disposed parallel to the conveyor, and comprise respective bases (18) of which one face rests on the ways (9) and the opposite face supports two vertical and parallel columns (19a, 19b) between which the work stations (4a, 5a) are installed, a first set of rollers (17) mounted transversely to the base (18) and carrying the belt loop (11) positioned below the level of the work stations, and a second set of rollers (20) mounted transversely to a plate (21) made fast to the top ends of the columns (19a, 19b) and parallel with the base (18), carrying the belt loop (12) positioned above the level of the work stations.

11) A tenoning machine as in claims 1 and 5, wherein the post (8c) of the single gripper (8) is offered to the workpieces (2) disposed perpendicular to the feed direction (F) and against the direction of rotation of the blades (4a) and cutters (5a), when traversed in the operative position.

12) A tenoning machine as in claim 1, wherein each of the grippers (8) is rotatable about the relative horizontal axis (x) through 90|.

**FIG1.**

7

# FIG 2

EP 0 424 332 A2

FIG 3

8

8a

2

8c

8b

14

16

15

8a

15a

16

EP 0 424 332 A2

FIG 4

FIG 6

# FIG 5